(19) Europäisches Patentamt
European Patent Office
Office européen des brevets

(11) **EP 2 370 711 B1**

(12) **EUROPÄISCHE PATENTSCHRIFT**

(45) Veröffentlichungstag und Bekanntmachung des Hinweises auf die Patenterteilung:
**30.03.2016   Patentblatt 2016/13**

(21) Anmeldenummer: **09741241.5**

(22) Anmeldetag: **26.10.2009**

(51) Int Cl.:
*F16H 47/04* *(2006.01)*        *F16H 61/46* *(2010.01)*
*F16H 37/08* *(2006.01)*        *F16H 37/10* *(2006.01)*

(86) Internationale Anmeldenummer:
**PCT/EP2009/007644**

(87) Internationale Veröffentlichungsnummer:
**WO 2010/060510 (03.06.2010 Gazette 2010/22)**

(54) **LEISTUNGSVERZWEIGUNGSGETRIEBE UND VERFAHREN ZU DESSEN STEUERUNG**

POWER SPLIT TRANSMISSION AND METHOD FOR CONTROLLING THE SAME

TRANSMISSION À RÉPARTITION DE PUISSANCE ET SON PROCÉDÉ DE COMMANDE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.11.2008   DE 102008059029**

(43) Veröffentlichungstag der Anmeldung:
**05.10.2011   Patentblatt 2011/40**

(73) Patentinhaber: **Robert Bosch GmbH**
**70442 Stuttgart (DE)**

(72) Erfinder:
• **SCHULTE, Horst**
**10961 Berlin (DE)**

• **WINKELHAKE, Jürgen**
**89233 Neu-Ulm (DE)**
• **ANDERL, Thomas**
**89231 Neu-Ulm (DE)**

(74) Vertreter: **Thürer, Andreas**
**Bosch Rexroth AG**
**BR/IPR**
**Zum Eisengiesser 1**
**97816 Lohr am Main (DE)**

(56) Entgegenhaltungen:
**DE-A1- 10 144 943        DE-A1- 19 856 544**
**US-A1- 2002 094 909    US-A1- 2006 172 854**
**US-B1- 6 260 440**

EP 2 370 711 B1

**Beschreibung**

Die Erfindung betrifft ein Leistungsverzweigungsgetriebe und ein Verfahren zum Durchführen während eines Fahrbereichswechsels.

In seit Jahren etablierten Schalt- und Automatikgetrieben mit hydrodynamischem Wandler werden Getriebestufen entweder durch mechanische Synchronisierungselemente oder durch Schlupf am Wandlerelement gewechselt. Die dabei zu überwindenden Übersetzungssprünge führen zu Drehzahl- und Drehmomentänderungen an An- und Abtrieb. Auch in stufenlosen Getriebekonzepten werden aufgrund der begrenzten Spreizung der elektrischen, mechanischen oder hydrostatischen Variatoren verschiedene Übersetzungsstufen eingesetzt, um einen guten Wirkungsgrad über den gesamten Geschwindigkeitsbereich zu ermöglichen. Unter Ausnutzung des zusätzlichen Freiheitsgrads im Variator könnte der Wechsel zwischen Fahrbereichen prinzipiell auch ohne Änderung der An- oder Abtriebsdrehzahl und auch ohne Zugkraftunterbrechung erfolgen.

So zeigt die deutsche Offenlegungsschrift DE 10 2007 037 107 A1 ein Leistungsverzweigungsgetriebe mit einem ersten hydrostatischen Leistungszweig mit einem hydrostatischen Variator und mit einem zweiten, mechanischen und durch eine Kupplung trennbaren Leistungszweig. Die beiden Leistungszweige werden in einen Summiergetriebeabschnitt zusammengeführt. In einem ersten Fahrbereich ist der zweite Leistungszweig getrennt und es wird nur mittels des ersten Leistungszweigs gefahren. Zur Beschleunigung wird das variable Übersetzungsverhältnis des ersten Leistungszweigs durch Steuerung des hydrostatischen Variators erhöht. Erreicht der getrennte Abtrieb des zweiten Leistungszweigs, der über das Summiergetriebe von dem ersten Leistungszweig angetrieben wird, eine Drehzahl, die der des Antriebs des zweiten Leistungszweigs entspricht, so ist eine Synchronisation erreicht und es wird die Kupplung des zweiten Leistungszweigs geschlossen und auch der zweite Leistungszweig mit dem Summiergetriebe verbunden. Bei Erreichen dieser Synchrondrehzahl wird also in den zweiten, leistungsverzweigten Fahrbereich gewechselt.

Da ein realer Variator aber in unterschiedlichen Fahrbereichen auch unterschiedliche Verlustleistungen hat, ist dieses Ideal eines zugkraftunterbrechungsfreien Fahrbereichswechsels bisher nicht erreicht.

Aus der DE 101 44 943 A1 ist ein gattungsgemäßes Leistungsverzweigungsgetriebe bekannt.

Die Aufgabe der Erfindung ist es, ein Leistungsverzweigungsgetriebe und ein Verfahren zum Wechseln zwischen Fahrbereichen zu schaffen, die die Probleme des Stands der Technik lösen. Vor allem ist es ein Ziel, eine einfache Lösung zum Fahrbereichswechsel ohne Zugkraftänderung zu realisieren, die gleichzeitig eine hohe Übertragbarkeit gewährleistet.

Die Aufgabe ist durch das erfindungsgemäße Leistungsverzweigungsgetriebe nach Anspruch 1 gelöst. Ein Leistungsverzweigungsgetriebe weist dazu einen ersten Leistungszweig mit einem stufenlos einstellbaren Übersetzungsverhältnis und einen trennbaren zweiten Leistungszweig auf. Die beiden Leistungszweige werden in einem Summiergetriebe wieder zusammengeführt. Eine Vorrichtung verbindet oder trennt bei Vorliegen einer Synchronbedingung den zweiten Leistungszweig vom Summiergetriebe beim Wechsel von einem Ausgangsfahrbereich in einen Zielfahrbereich. Eine Steuervorrichtung zum Steuern und Einstellen des Übersetzungsverhältnisses des ersten Leistungszweigs ist mit dem ersten Leistungszweig verbunden. Eine Vorhersagevorrichtung zum Vorhersagen eines Wirkungsgrads des ersten Leistungszweigs in einem Zielfahrbereich ist mit der Steuervorrichtung verbunden. Die Steuervorrichtung ist so eingerichtet, dass die stufenlos einstellbare Übersetzung bei einem Wechsel in den Zielfahrbereich unter Berücksichtigung des vorhergesagten Wirkungsgrads so eingestellt wird, dass eine Drehzahldifferenz am Ausgang des ersten Leistungszweigs aufgrund einer Leistungsflussänderung in dem ersten Leistungszweig durch das Verbinden oder Trennen des zweiten Leistungszweigs gerade kompensiert wird.

Die Aufgabe ist zusätzlich durch das erfindungsgemäße Verfahren nach Anspruch 8 gelöst. Das erfindungsgemäße Verfahren zum Wechseln von einem Ausgangsfahrbereich in einen Zielfahrbereich steuert ein Leistungsverzweigungsgetriebe mit einem ersten Leistungszweig mit einer stufenlos einstellbaren Übersetzung und mit einem zweiten, trennbaren Leistungszweig. Der Wirkungsgrad des ersten Leistungszweigs in dem Zielfahrbereich wird vorhergesagt und beim Vorliegen einer Synchronbedingung wird der zweite Leistungszweig zum Wechsel von dem Ausgangsfahrbereich in Zielfahrbereich verbunden oder getrennt. Daraufhin wird die stufenlos einstellbare Übersetzung des ersten Leistungszweigs unter Berücksichtigung des vorhergesagten Wirkungsgrads so eingestellt, dass eine Drehzahldifferenz am Ausgang des ersten Leistungszweigs aufgrund einer sich ergebenden Leistungsflussänderung in dem ersten Leistungszweig nach dem Wechsel in den Zielfahrbereich gerade kompensiert wird.

Die Unteransprüche betreffen vorteilhafte Weiterbildungen des erfindungsgemäßen Leistungsverzweigungsgetriebes und des erfindungsgemäßen Verfahrens.

Der Vorteil der Erfindung gegenüber dem Stand der Technik ist, dass der Wirkungsgrad im Zielfahrbereich vor dem Fahrbereichswechsel vorhergesagt und das variable Übersetzungsverhältnis des ersten Leistungszweigs nach dem Verbinden oder Trennen des zweiten Leistungszweigs entsprechend korrigiert wird. Somit tritt die Problematik einer endlichen Ausregelzeit und die dafür notwendige Anwendung einer aufwendigen und sehr dynamischen Mess- und Regeltechnik gar nicht auf.

Besonders vorteilhaft ist es, einen momentanen Wirkungsgrad des ersten Leistungszweigs zu schätzen und den Wirkungsgrad des ersten Leistungszweigs im Zielfahrbereich auf der Basis des geschätzten momentanen Wirkungsgrads vorherzusagen. Dadurch kann die Zuverlässigkeit der Vorhersage bei unterschiedlichen Betriebsbedingungen, wie z.B. schwankenden Temperaturen, sichergestellt werden.

Vor allem im Bereich der mobilen Arbeitsmaschinen sind hydrostatische Leistungsübertragungen üblich. Deshalb ist es besonders vorteilhaft, die stufenlos einstellbare Übersetzung durch einen hydrostatischen Variator umfassend einen Hydromotor und einer Hydropumpe zu realisieren. Das Übersetzungsverhältnis wird über das Verdrängungsvolumen des Hydromotors und/oder der Hydropumpe eingestellt. Der Hydromotor und die Hydropumpe bilden über zwei hydraulische Leitungen einen geschlossen Kreislauf. Die Übersetzung in einem Variator kann dabei auch mechanisch oder elektrisch realisiert werden.

Besonders vorteilhaft für ein erfindungsgemäßes Leistungsverzweigungsgetriebe mit einem hydrostatischen Variator im ersten Leistungszweig ist es, einen momentanen volumetrischen Wirkungsgrad des hydrostatischen Variators auf der Basis des Druckunterschieds zwischen den zwei den Hydromotor und die Hydropumpe verbindenden Leitungen zu schätzen. Daraufhin kann der Wirkungsgrad des ersten Leistungszweigs im Zielfahrbereich auf der Basis des momentanen volumetrischen Wirkungsgrads des Variators vorhergesagt werden, da die Verlustleistung im restlichen ersten Leistungszweig in den unterschiedlichen Fahrbereichen näherungsweise konstant bleibt. Dadurch kann der Wirkungsgrad des ersten Leistungszweigs auf der Basis des einfach zu messenden Druckunterschieds in den zwei Leitungen vorhergesagt werden.

Ein Ausführungsbeispiel der Erfindung wird nachfolgend anhand der Zeichnung beschrieben. Die Zeichnung zeigt:

Fig. 1     eine schematische Darstellung eines Ausführungsbeispiels des erfindungsgemäßen Leistungsverzweigungsgetriebes;

Fig. 2     einen Ablauf eines Ausführungsbeispiels des erfindungsgemäßen Verfahrens;

Fig. 3     ein Modell zur Berechnung des volumetrischen Wirkungsgrads eines hydrostatischen Variators; und

Fig. 4     verschiedene Messgrößen und Parameter des erfindungsgemäßen Leistungsverzweigungsgetriebes bei einem Fahrbereichswechsel aufgetragen über die Zeit.

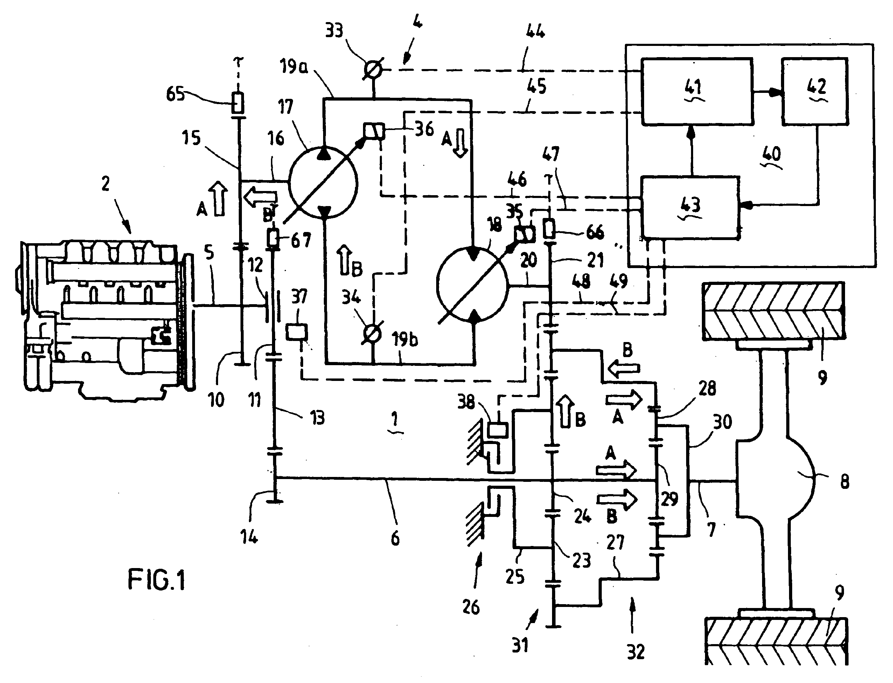

Fig. 1 zeigt ein erfindungsgemäßes Leistungsverzweigungsgetriebe 1, welches die Leistung eines Verbrennungsmotors 2 als Antriebsmotor auf mindestens ein Antriebsrad 9 überträgt. Dazu treibt der Verbrennungsmotor 2 eine Hauptantriebswelle 5 und ein mit der Hauptantriebswelle 5 fest und kraftschlüssig verbundenes Zahnrad 10 an. Das Zahnrad 10 treibt wiederum den ersten Leistungszweig an. Zusätzlich ist die Hauptantriebswelle 5 über eine reibungsschlüssige Kupplung 12 mit einem weiteren Zahnrad 11 als Eingang des zweiten Leistungszweigs verbindbar.

Der zweite Leistungszweig weist ein festes Übersetzungsverhältnis auf, das durch die Zahnräder 11, 13 und 14 bestimmt ist, und überträgt im Falle einer geschlossenen Kupplung 12, d.h. im Falle eines verbundenen zweiten Leistungszweigs, über die genannten Zahnräder 11, 13 und 14 die Leistung des Verbrennungsmotors 2 zumindest teilweise auf die Abtriebswelle 6 als Ausgang des zweiten Leistungszweigs. Die Drehzahl des Zahnrads 11 wird durch einen Drehzahlsensor 67 erfasst.

Das Zahnrad 10 der Hauptantriebswelle 5 treibt ein Zahnrad 15 des ersten Leistungszweigs an, welches kraftschlüssig auf einer ersten Pumpenantriebswelle 16 montiert ist. Die Pumpenantriebswelle 16 treibt ein hydrostatisches Getriebe 4 mit stufenlos einstellbarer Übersetzung an. Das hydrostatische Getriebe 4 überträgt wiederum die zugeführte Leistung an eine Motorabtriebswelle 20 und ein darauf fest montiertes Zahnrad 21 als Ausgang des ersten Leistungszweigs.

Die Drehzahl der Pumpenantriebswelle 16 wird durch einen Drehzahlsensor 65 und die Drehzahl der Motorabtriebswelle 20 durch einen Drehzahlsensor 66 erfasst. An der Drehzahl der Pumpenantriebswelle 16 ergibt sich auch die Drehzahl der Hauptantriebswelle 5.

Das hydrostatische Getriebe 4 weist eine verstellbare Hydropumpe 17 auf, die von der Pumpenantriebswelle 16 angetrieben wird. Die angetriebene Hydropumpe 17 pumpt Hydrauliköl oder eine sonstige Hydraulikflüssigkeit über eine erste Hydraulikleitung 19a zu einem verstellbaren Hydromotor 18 des hydrostatischen Getriebes 4, der von dem ihn durchfließenden Hydrauliköl angetrieben wird. Der Hydromotor 18 treibt so die Motorabtriebswelle 20 an und leitet das Hydrauliköl über die zweite Leitung 19b zurück zu der Hydropumpe 17.

Das hydrostatische Getriebe 4 wird von einer Steuervorrichtung 43 in einem Steuergerät 40 zur Einstellung des Übersetzungsverhältnisses gesteuert, wobei die Steuervorrichtung 43 elektrische Stellsignale über elektrische Leitungen 47 und 46 an Proportionalmagnete 35 und 36 von Stellvorrichtungen sendet. Die Stellvorrichtungen verändern z.B. proportional zu den Stellsignalen der Steuervorrichtung 43 jeweils den Winkel der Schrägscheiben oder Schrägachsen des Hydromotors 18 und/oder der Hydropumpe 17 und damit jeweils das eingestellte Verdrängungsvolumen.

Durch die Erhöhung des Pumpvolumens der Hydropumpe 17 und/oder durch die Verkleinerung des Verdrängungsvolumens des Hydromotors 18 kann die Drehgeschwindigkeit des Hydromotors 17 erhöht und das Übersetzungsverhältnis aus An- zu Abtriebsdrehzahl vergrößert werden. So lässt sich durch Variation des Schwenkwinkels der Schrägscheibe von Hydropumpe 17 und Hydromotor 18 das Übersetzungsverhältnis stufenlos einstellen.

Das Summiergetriebe des Ausführungsbeispiels besteht aus zwei gekoppelten Planetengetrieben 31 und 32. Die Planetengetriebe 31 und 32 weisen starr gekoppelte Hohlräder auf. Die Hohlräder des ersten und zweiten Planetengetriebes 31 und 32 werden als funktionelle beschrieben, da es sich tatsächlich um ein einziges Bauteil 27 handelt, das die zwei funktionellen Hohlräder aufweist. Dabei weist der Hohlradteil des ersten Planetengetriebes 31 Zähne nicht nur auf der Innensondern auch auf der Außenseite des Hohlrads auf. Der äußere Zahnring des gemeinsamen Hohlrads 27 bildet dabei den ersten Eingang des Summiergetriebes, in den das Zahnrad 21 als Ausgang des ersten Leistungszweigs greift. Die beiden Sonnenräder 24 und 29 des ersten und zweiten Planetengetriebes 31 und 32 sitzen jeweils kraftschlüssig verbunden auf der Abtriebswelle 6 des zweiten Leistungszweigs, die gleichzeitig den Ausgang des zweiten Leistungszweigs und den zweiten Eingang des Summiergetriebes bildet. Die beiden Planetengetriebe 31, 32 haben demzufolge eine feste Kopplung zwischen den beiden Sonnenrädern 24 und 29 und zwischen den beiden funktionellen Hohlrädern, die als ein Bauteil 27 realisiert sind.

Die Planetenräder 23 des ersten Planetengetriebes 31 sind über einen Planetenträger 25 und über eine Kupplung 26 gehäuseseitig feststellbar, so dass bei geschlossener Kupplung 26 die Planetenräder 23 sich nur um ihre eigene Achse drehen können, aber keine Translation bzw. Drehung um die Abtriebswelle 6 vollziehen können. Dadurch kann eine konstruktiv durch die Planetengetriebebauteile bestimmte Übersetzung zwischen dem funktionellen Hohlrad des ersten Planetengetriebes 31 und dem Sonnenrad 24 und somit auch dem Sonnenrad 29 festgestellt werden. Die Planetenräder 28 des zweiten Planetengetriebes 32 drehen sich aufgrund der gegenläufigen und betragsmäßig unterschiedlichen Zahngeschwindigkeiten des Sonnenrads 29 und des funktionellen Hohlrads des zweiten Planetengetriebes 32 um die Achse der Abtriebswelle 6. Diese Drehbewegung der Planetenräder 28 wird über einen weiteren Planetenträger 30 auf eine Hauptabtriebswelle 7 übertragen, die gemäß dem Stand der Technik z.B. über ein Differential 8 und zwei Halbwellen zu den Rädern 9 geführt werden. Deshalb müssen die beiden Planetengetriebe 31 und 32 unterschiedliche Übersetzungen aufweisen, so dass das Hohlrad 27 und das Sonnenrad 29 bei geschlossener Kupplung 26 betragsmäßig unterschiedliche Geschwindigkeiten haben, da im ersten Planetengetriebe 31 die Planetenräder 23 festgehalten werden und bei gleicher Ausführung des Planetengetriebes 32, die Planetenräder 28 ebenfalls stillstehen würden. Wird die Kupplung 26 geöffnet, können sich die Planetenräder 23 auch um die Achse der Abtriebswelle 6 drehen und es besteht kein festes Übersetzungsverhältnis zwischen dem Sonnenrad 24 und dem Hohlrad 27.

Die beiden Kupplungen 26 und 12 werden jeweils von Betätigungsvorrichtungen 38 und 37 geöffnet oder geschlossen. Die Betätigungsvorrichtungen 38 und 37 werden über Steuerleitungen 49 und 48 von der Steuervorrichtung 43 des Steuergeräts 40 gesteuert.

In einem ersten, langsamen Fahrbereich wird rein mit dem hydrostatischen Leistungszweig gefahren und die Kupplung 12 ist geöffnet, so dass der zweite Leistungszweig unterbrochen oder getrennt wird und nicht mehr direkt von dem Verbrennungsmotor 2 angetrieben wird. Die Kupplung 26 ist im ersten Fahrbereich geschlossen, um wie oben beschrieben den ersten und zweiten Eingang des Summiergetriebes mit einem festen Übersetzungsverhältnis mit dem Ausgang des ersten Leistungszweiges zu verbinden. So wird Drehzahl und Drehmoment nur über den ersten Leistungszweig übertragen. Zum Anfahren benötigt eine Arbeitsmaschine normalerweise sehr hohes Drehmoment, weshalb der Motor 18 auf maximales Verdrängungsvolumen gestellt wird und die Pumpe 17 beginnend von einem verschwindenden Pumpvolumen das Pumpvolumen vergrößert. Somit kann durch verkleinern der Übersetzung ausgehend von einer unendlich großen Übersetzung des hydrostatischen Getriebes 4 im ersten Fahrbereich angefahren und beschleunigt werden. Somit kann der Verbrennungsmotor 2 immer mit einer effizienten Drehzahl betrieben werden. Ist das maximale Pumpenvolumen erreicht, kann weiter das Verdrängungsvolumen des Motors 18 verkleinert werden. Der Leistungsfluss im ersten Fahrbereich ist in Fig. 1 durch die mit "A" gekennzeichneten Pfeile gezeigt.

Da der Ausgang des ersten Leistungszweigs im ersten Fahrbereich über das Summiergetriebe oder genauer über das erste Planetengetriebe 31 mit dem Ausgang des zweiten Leistungszweigs kraftschlüssig verbunden ist, wird auch der zweite Leistungszweig bestehend aus der Abtriebswelle 6 und den Zahnrädern 14, 13, 11 angetrieben. Wird nun das Fahrzeug so weit beschleunigt bzw. wird das Verdrängungsvolumen des Motors 18 bei maximalem Pumpvolumen so weit verringert, dass die Hauptantriebswelle 5 und das Zahnrad 11 die gleiche Drehzahl erreicht haben, kann die Kupplung 12 ohne weitere Anpassung der Drehzahl geschlossen werden und die Hauptantriebswelle 5 auch über den zweite Leistungszweig mit dem zweiten Eingang des Summiergetriebes verbunden werden. Die Betätigungsvorrichtung 37, die von einem von der Steuervorrichtung 43 über die Leitung 48 gesendeten Steuersignal in Gang gesetzt wird, schließt die Kupplung 12. Nachdem die Kupplung 12 geschlossen wurde und der zweite Leistungszweig verbunden wurde, wird die Kupplung 26 geöffnet, so dass nun der zweite Leistungszweig die Sonnenräder 24 und 29 antreibt, während der erste Leistungszweig das Hohlrad 27 antreibt. Dies ist nun der zweite, leistungsverzweigte Fahrbereich. Durch ein Abbremsen des Hohlrads durch Vergrößern des Motorschwenkwinkels bzw. des Verdrängungsvolumens des Hydromotors 18 und darauffolgendes Reduzieren des Pumpvolumens wird die Relativgeschwindigkeit zwischen den gegenläufigen Hohlrad 27 und Sonnenrad 29 erhöht. Damit werden die Planetenräder 28 und damit die Räder 9 weiter beschleunigt. Für das hier beschriebene Ausführungsbeispiel ist es wichtig, dass der hydrostatische Variator 4 eine negative Übersetzung aufweist, d.h. dass sich die Antriebswelle 16 gegenläufig zur Motorabtriebswelle 20 dreht, da sich ansonsten die Hauptantriebswelle 5 gegenläufig zu dem Zahnrad 11 drehen würde. Die Beschreibung der Veränderung der Übersetzung bezieht sich aber immer auf den Betrag der Übersetzung.

Bei der bisherigen Ausführung wurden die Leckflüsse in dem Hydromotor 18 und der Hydropumpe 17 vernachlässigt, die allgemein im volumetrischen Wirkungsgrad des hydrostatischen Getriebes 4 zusammengefasst werden. Deshalb wird im ersten Fahrbereich der Motorschwenkwinkel stets etwas kleiner als im idealen verlustfreien Fall eingestellt. Auch wenn im zweiten Fahrbereich die beiden Eingänge des Summiergetriebes nicht fest miteinander gekoppelt sind, wird trotzdem Leistung von dem zweiten Leistungszweig über die Planetenräder 23 und 28 auf den ersten Leistungszweig übertragen. Dieser Blindleistungsfluss des zweiten Fahrbereichs ist durch die mit B gekennzeichneten Pfeile markiert. Dadurch kommt es zu einer Leistungsflussumkehr im hydrostatischen Variator 4 und dessen volumetrischer Wirkungsgrad dreht sich um. Das heißt, der Hydromotor 18 arbeitet als Pumpe und die Hydropumpe 17 arbeitet als Motor, die unabhängig von ihrer Funktion weiterhin als Hydromotor 18 und Hydropumpe 17 bezeichnet werden. Zum Ausgleich der Drehzahlverluste und aufgrund des erwünschten stetigen Übergangs der Übersetzung an der Grenze zwischen dem ersten und zweiten Fahrbereich wird zu Beginn des zweiten Fahrbereichs der Schwenkwinkel vom Motor 18 stets größer als im idealen Fall eingestellt.

Im Übergangsbereich sind beide Kupplungen 12 und 26 im Leistungsverzweigungsgetriebe 1 geschlossen, da zur Realisierung einer zuverlässigen Momentübergabe zwischen der zu öffnenden und zu schließenden Kupplung eine gewisse Überschneidung notwendig ist. Es muss wegen der Toleranzen und Unsicherheiten im Kupplungsdruckaufbau und bei Lastmomentänderung sicher gestellt sein, dass die Kupplung 12 in jedem Fall das Moment des Verbrennungsmotors 2 übertragen kann. Beim Kupplungsschaltprozess handelt es sich um einen kontinuierlichen Vorgang, bei dem die dazu geschaltete Kupplung 12 zunächst mitrutscht, dann anliegt und den Antriebsstrang aufgrund der kinematischen Zwangskopplung kurz verspannt, bevor die vorher betätigte Kupplung 26 geöffnet wird.

Durch die kurzzeitige Verspannung im Übergangsbereich wird allerdings verhindert, dass die Hydromotordrehzahl durch Änderung des Hydromotorschwenkwinkels verstellt werden kann. Erst wenn die vorher geschlossene Kupplung 26 geöffnet wird, ist diese Drehzahl wieder variierbar. Ab diesem Zeitpunkt ist es nun prinzipiell möglich, die sich zwangsläufig einstellende Drehzahldifferenz, verursacht durch die plötzlichen leckflussabhängigen Wirkungsgradänderungen, kontinuierlich auszuregeln. Eine unterbrechungsfreie Zugkraft kann damit jedoch aufgrund der endlichen Ausregelzeit nicht realisiert werden. Erst durch das erfindungsgemäße Vorgehen, bei dem der Hydromotor im Übergangsbereich gesteuert auf den passenden wirkungsgradbereinigten Schwenkwinkel eingestellt wird, wird ein ungewünschter Momenteinbruch bzw. eine Momenterhöhung verhindert. Die Idee dieser Erfindung ist es, den Wirkungsgrad zu Beginn des zweiten Fahrbereichs vorherzusagen und den Motorschwenkwinkel während des Fahrbereichwechsels, d.h. während beide Kupplungen 12 und 26 geschlossen sind, unter Berücksichtigung dieses vorhergesagten Wirkungsgrads so einzustellen, dass es zu keiner Drehzahländerung am Ausgang des hydrostatischen Variators 4 aufgrund der Leistungsflussumkehr kommt, wenn die Kupplung 26 geöffnet wird. Unter Vorhersagen wird dabei eine Berechnung des Wirkungsgrades vor oder bei der Schließung der Kupplung 12 verstanden, so dass der Schwenkwinkel des Hydromotors 18 direkt nach dem Schließen der Kupplung 12 entsprechend eingestellt werden kann und beim Öffnen der Kupplung 26 das aus dem vorhergesagten Wirkungsgrad berechnete Schluckvolumen bereits anliegt.

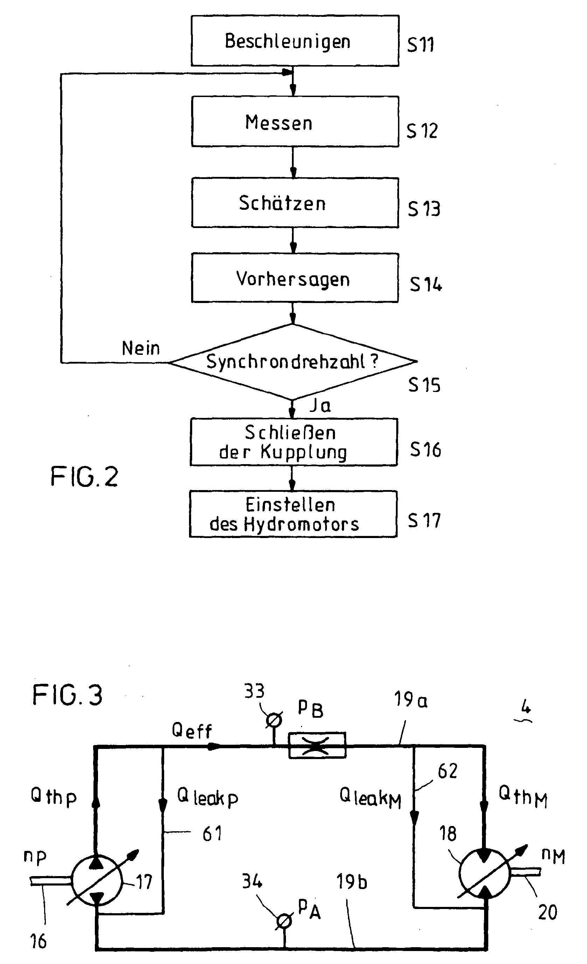

Fig. 2 beschreibt ein Ausführungsbeispiel des erfindungsgemäßen Verfahrens, welches im Folgenden zusammen mit Ausführungsbeispiel des erfindungsgemäßen Leistungsverzweigungsgetriebes aus Fig. 1 beschrieben wird. Fig. 2 beschreibt exemplarisch einen Fahrbereichswechsel von dem ersten langsamen Fahrbereich als Ausgangsfahrbereich in einen schnelleren zweiten Fahrbereich als Zielbereich.

In Schritt S11 befindet sich das Leistungsverzweigungsgetriebe 1 im ersten Fahrbereich und das Fahrzeug wird durch Reduktion des Übersetzungsverhältnisses des hydrostatischen Getriebes 4 beschleunigt. In den nachfolgenden Schritten S12 bis S14 werden ständig Prozessparameter gemessen, der momentane volumetrische Wirkungsgrad geschätzt und basierend auf dem momentanen Wirkungsgrad eine Vorhersage für den volumetrischen Wirkungsgrad im zweiten Fahrbereich getroffen. Dies soll im Folgenden anhand Fig. 3 genauer erläutert werden. Der Wirkungsgrad soll dabei möglichst einfach und aus einer geringen Anzahl einfach zu messender Prozessparametern vorhergesagt werden können.

Fig. 3 zeigt ein einfaches Modell der Leckflüsse des hydrostatischen Getriebes 4. Fig. 3 zeigt neben den realen Leitungen 19a und 19b auch die Leckflüsse 61 und 62 von Hydropumpe 17 und Hydromotor 18. Deshalb ergibt sich der volumetrische Wirkungsgrad

$$\eta_V = \frac{Q_{thP} - Q_{LeakP}}{Q_{thM} + Q_{LeakM}} \cdot \frac{Q_{thM}}{Q_{thP}} \qquad\qquad (1)$$

aus den um die Leckflüsse korrigierten theoretischen Motor- und Pumpflüssen. $Q_{thP}$, $Q_{thM}$ bezeichnen dabei den theoretischen Volumenstrom von Hydropumpe 17 bzw. Hydromotor und $Q_{LeakP}$, $Q_{LeakM}$ die zugeordneten Verlustströme. Die idealen Volumenströme

$$Q_{thM} = V_{M\,max} \cdot u_M \cdot n_M \qquad\qquad (2)$$

$$Q_{thP} = V_{P\,max} \cdot u_P \cdot n_P \qquad\qquad (3)$$

lassen sich aus der Hydromotor- bzw. der Hydropumpendrehzahl n und dem jeweiligen normierten Stellsignal u der Steuervorrichtung 43 berechnen. Vp, Vm bezeichnet das maximale Verdrängungsvolumen von Hydropumpe 17 bzw. Hydromotor 18. Mit der Annahme, dass die Leckflüsse von Hydromotor 18 und Hydropumpe 17 gleich groß sind, muss nur noch ein Gesamtleckfluss geschätzt werden, um den momentanen volumetrischen Wirkungsgrad zu berechnen. Der Gesamtleckfluss

$$Q_{Leak} = \theta_{\Delta p} \cdot \Delta p = Q_{thP} - Q_{thM} \qquad mit \qquad \Delta p = p_B - p_A \qquad\qquad (4)$$

wird in erster Näherung aus einer linearen Beziehung zum Druckunterschied $\Delta P$ zwischen den beiden Leitungen 19a und 19b bestimmt. Der Schätzparameter $\theta_{\Delta p}$ wird dabei einmalig Offline aus den gemessenen Drücken in den beiden Leitungen 19a und 19b, den Drehzahlen $n_p$, $n_M$ und den normierten Stellsignalen $u_p$, $u_M$ basierend auf den vorhergehenden Beziehungen (2), (3) und (4) mit Hilfe des Least-Square Verfahrens geschätzt. Der Schätzparameter $\theta_{\Delta p}$ wird dann als fester Wert in einer Schätzvorrichtung 41 in dem Steuergerät 40 gespeichert. Diese Schätzvorrichtung 41 ist über die Leitungen 44 und 45 mit den Drucksensoren 33 und 34 verbunden, misst den Druckunterschied und kann so mit dem gespeicherten Schätzparameter den Gesamtleckfluss berechnen. Zusätzlich ist die Schätzvorrichtung 41 mit der Steuervorrichtung 43 verbunden, um die momentanen jeweiligen Stellsignale und die von den Sensoren 65 und 66 erfassten und übermittelten Drehzahlen von Hydropumpe 17 und Hydromotor 18 zu erfahren. Mit den Gleichungen (1), (2) und (3) lässt sich so der momentane volumetrische Wirkungsgrad schätzen. Dabei wird der Motor- und Pumpleckfluss $Q_{LeakM}$, $Q_{LeakP}$ jeweils als halber Gesamtleckfluss angenommen. Da sich der momentane volumetrische Wirkungsgrad zu jeder Zeit aus den Gleichungen (1), (2), (3) und (4) und aus dem Druckunterschied, den Stellsignalen, den Drehzahlen und den Schätzparameter $\theta_{\Delta p}$ berechnet, kann der momentane Wirkungsgrad auch als "berechnet" bezeichnet werden. Da allerdings der Parameter $\theta_{\Delta p}$ geschätzt wird, wird auch der momentane volumetrische Wirkungsgrad als "geschätzt" bezeichnet.

Zur Verbesserung der Schätzung sind auch lineare und nichtlineare Modelle höherer Ordnung denkbar. Untersucht wurde z.B. ein lineares Modell, das den Gesamtleckfluss als Linearkombination von Drehzahl und Stellsignal von jeweils Hydromotor 18 und Hydropumpe 17 und von dem Druckunterschied beschreibt. Allgemein beschreibt dieses Modell zwar den Leckfluss wesentlich besser als das erläuterte, einfache Modell, welches nur linear von dem Druckunterschied abhängt, aber gerade an den für die Erfindung relevanten Fahrbereichswechseln zeigt sich ein überraschend gutes und mit dem komplexeren Modell durchaus vergleichbares Ergebnis des einfachen ersten Modells 4. Zusätzlich ist das Signal zu Rausch Verhältnis des ersten Modells wesentlich niedriger, da nur ein Sensorsignal in die Schätzung eingeht. Ein weiterer Vorteil ist die Abhängigkeit von nur einem Parameter, die es erlaubt, bei der Schätzung des Leckflussparameters $\theta_{\Delta p}$ einfache robuste rekursive Algorithmen zur Onlineschätzung einzusetzen.

Dadurch lässt sich der Schätzparameter $\theta_{\Delta p}$ ständig verbessern und eventuelle Änderungen der Betriebsbedingungen anpassen. Die Online- und OfflineSchätzung lässt sich auch vorteilhaft kombinieren. So kann der Parameter $\theta_{\Delta p}$ für verschiedene Betriebszustände, wie z.B. die Temperatur, offline geschätzt werden, wobei der Leckfluss $Q_{LeakP}$ dann durch den für zahlreiche Temperaturen geschätzte und gespeicherte Parameter $\theta_{\Delta p}(T)$ berechnet wird.

Um die Schätzung des momentanen volumetrischen Wirkungsgrads weiter zu verbessern, können bei der Offlineschätzung des Schätzparameters verstärkt die gemessenen Drücke in der Nähe der Fahrbereichswechsel in die Schätzung einfließen. Dies kann mit Hilfe einer lokalen Gewichtungsfunktion realisiert werden, die in den Least-Square Algorithmus integriert wird.

In Schritt S12 werden also die Drücke mit den Drucksensoren 33 und 34 der Leitungen 19a und 19b gemessen und über die Steuerleitungen 44 und 45 an die Schätzvorrichtung 41 übermittelt. Gleichzeitig werden auch die Drehzahlen $n_p$, $n_M$ des Hydromotors 18 und der Hydropumpe 17 mit den Sensoren 65 und 66 gemessen und direkt über weitere Steuerleitungen an die Schätzvorrichtung 41 übergeben.

In Schritt S13 wird wie beschrieben der Gesamtleckfluss auf der Basis des gemessenen Druckunterschieds geschätzt und unter Verwendung des geschätzten Gesamtleckflusses und der von der Steuervorrichtung 43 erhaltenen Stellsignale und Drehzahlen von jeweils Motor 18 und Pumpe 17 ein momentaner volumetrischer Wirkungsgrad $\eta_v$ berechnet.

In Schritt S14 wird der volumetrische Wirkungsgrad $\eta_v$ zu Beginn des zweiten Fahrbereichs vorhergesagt. Dazu übermittelt die Schätzvorrichtung 41 ihr Ergebnis des momentanen volumetrischen Wirkungsgrads $\eta_v(t_{e\_FB1})$ an die Vorhersagevorrichtung 42. Die Vorhersagevorrichtung 42 ist so eingerichtet, dass sie den volumetrischen Wirkungsgrad zu Beginn des zweiten Fahrbereichs $(t_{s\_FB2})$ mit der Formel

$$\eta_V(t_{s\_FB2}) = |\eta_V(t_{s\_FB1}) - 1| \cdot \beta + \eta_V(t_{s\_FB1}) \tag{5}$$

in Abhängigkeit des geschätzten momentanen volumetrischen Wirkungsgrads $\eta_v(t_{e\_FB1})$ am Ende des ersten Fahrbereichs $t_{e\_FB1}$ voraussagt. Der Faktor $\beta$ zum Einstellen des Wirkungsgradsprungs wird experimentell z.B. in Prüfstandsversuchen ermittelt und ist individuell für jeden Fahrbereichwechsel festgelegt. Damit wird auch die Richtung des Fahrbereichwechsels (FB1 → FB2 oder FB2 → FB1) berücksichtigt.

In Schritt S15 wird getestet, ob bereits wie oben beschrieben die Synchronbedingung erfüllt ist, das heißt, ob die Hauptabtriebswelle 5 die gleiche Winkelgeschwindigkeit oder Drehzahl wie das Zahnrad 11 hat. Ist diese Drehzahl des Zahnrads 11 noch nicht erreicht, werden die Schritte S12 bis S14 ständig ausgeführt, da die Rechnung nicht sehr rechenintensiv ist und der vorhergesagte Wirkungsgrad zu jeder Zeit vorliegt. Die Ergebnisse der Berechnung werden jedoch nur am Ende des ersten Fahrbereichs $t_{e\_FB1}$ verwendet und bei Erreichen der Synchrondrehzahl verarbeitet. Ist diese Drehzahl nun erreicht, wird in Schritt S16 die Kupplung 12 geschlossen, das korrigierte Übersetzungsverhältnis eingestellt und die Kupplung 26 geöffnet wie es zuvor ausführlich beschrieben wurde.

In Schritt S17 stellt die Steuervorrichtung 43 sofort nach dem Schließen der Kupplung 12 unter Berücksichtigung des vorhergesagten volumetrischen Wirkungsgrads $\eta_v$ $(t_{s\_FB2})$ zu Beginn des zweiten Fahrbereichs $t_{s\_FB2}$ den Stellwinkel des Hydromotors 18 so ein, dass eine Drehzahländerung am Ausgang des hydrostatischen Getriebes 4 beim Öffnen der Kupplung 26 aufgrund der Leistungsflussumkehr im hydrostatischen Getriebes 4 gerade kompensiert wird. Durch die Kenntnis des vorhergesagten Wirkungsgrads $\eta_v$ $(t_{s\_FB2})$ kann man das benötigte Verhältnis

$$\frac{\alpha_m}{\alpha_p} = \frac{\eta_V(t_{s\_FB2}) \cdot n_P \cdot V_{P\,\max}}{n_M \cdot V_{M\,\max}} = a, \tag{6}$$

um den Stellwinkel des Motors in Abhängigkeit des Stellwinkels der Pumpe einzustellen, berechnen.

Der Fahrbereichswechsel vom zweiten Fahrbereich als Ausgangsfahrbereich in den ersten Fahrbereich als Zielfahrbereich erfolgt analog. Dabei wird im zweiten Fahrbereich weiterhin ständig Schritt S12 bis S14 ausgeführt, nur dass in Schritt S14 der volumetrische Wirkungsgrad $\eta_v$ $(t_{e\_EB1})$ des Endes des ersten Fahrbereichs vorhergesagt wird. Das Ende des ersten Fahrbereichs ist der Punkt der höchsten Ausgangsdrehzahl bzw. der niedrigsten Übersetzung des ersten Fahrbereichs, der durch den Wechsel in den zweiten Fahrbereich gekennzeichnet ist. Weiterhin wird wie in Schritt S15 ständig gemessen, ob sich im zweiten Fahrbereich die Drehzahl soweit reduziert hat, dass eine Synchronbedingung vorliegt. Ist dies nicht der Fall, wird weiterhin die zuvor beschriebenen Schritte S12, S13 und der analoge Schritt zu S14 ausgeführt.

Die Synchronbedingung bei diesem Fahrbereichswechsel ist allerdings nicht mehr über die gleiche Drehzahl von Hauptantriebswelle 5 und Zahnrad 11 definiert, da diese durch die geschlossene Kupplung 12 zwangsweise die gleiche Drehzahl haben. Vielmehr muss bei der Synchronbedingung sicher gestellt werden, dass bei der Trennung von Hauptantriebswelle 5 und Zahnrad 11 durch das Öffnen der Kupplung 12 die Drehzahlen beider Bauteile 5 und 11 gleichbleiben. Deshalb wird beim Stillstehen der Planetenräder 23 als Synchronbedingung, d.h. bei alleiniger Rotation der Planetenräder 23 um deren eigene Achse ohne Rotation um die Abtriebswelle 6, die Kupplung 26 geschlossen. Dies garantiert ein ruckfreies Schließen der Kupplung 26. Durch das Einstellen des Hydromotors 18 im Fahrbereichswechsel unter Berücksichtigung des vorhergesagten volumetrischen Wirkungsgrads $\eta_v$ $(t_{e\_FB1})$ am Ende des ersten Fahrbereichs wird die durch die Leistungsflussumkehr im hydrostatischen Variator 4 verursachte Drehzahländerung beim Öffnen der Kupplung 12 gerade kompensiert. Nun kann der zweite Leistungszweig durch Öffnen der Kupplung 12 ohne Drehmomenteinbruch von der Hauptantriebswelle 5 getrennt werden. Hierzu wird wieder die Formel (6) mit dem neu vorhergesagten Wirkungsgrad $\eta_v$ $(t_{e\_FB1})$ anstatt $\eta_v$ $(t_{s\_FB2})$ angewandt. Zur Vorhersage des Wirkungsgrades $n_v$ $(t_{e\_FB1})$ wird ebenfalls die Formel (5) unter Vertauschung der Wirkungsgrade und einem für diesen Fahrbereichswechsel geschätzten Parameter verwendet.

Eine Synchronbedingung ist abhängig von der Richtung des Fahrbereichswechsels. Im Falle der mechanischen Kupplung 12 sind das gleiche Drehzahlen vor dem Verbinden oder gleiche Drehmomente vor dem Trennen, so dass es nach dem Trennen keine durch die Trennung verursachte Drehzahländerung gibt.

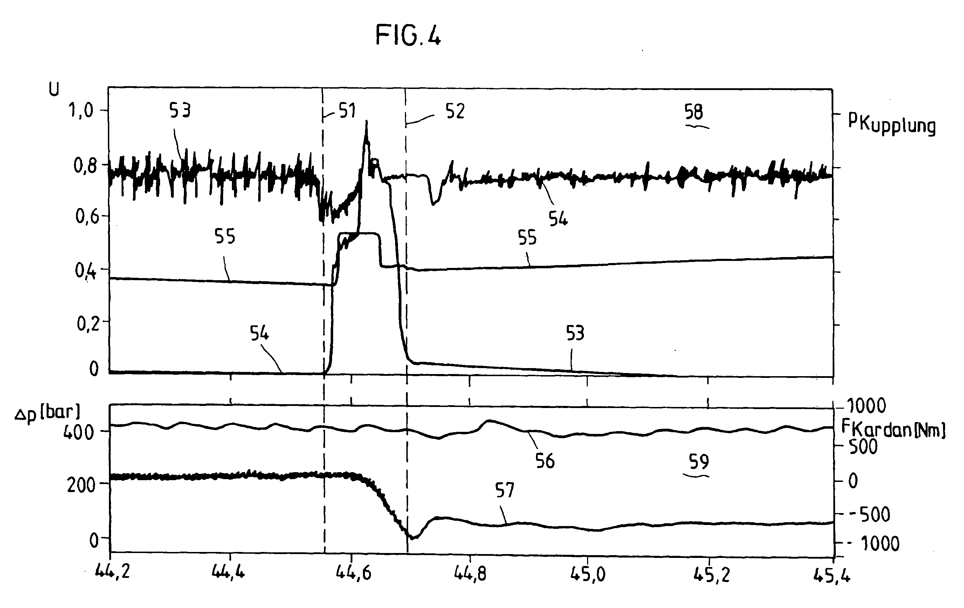

Fig. 4 zeigt gemessene Prozessgrößen, die einen zugkraftunterbrechungsfreien und ruckfreien Fahrbereichswechsel bestätigen. In den beiden Diagrammen 58 und 59 ist die zeitliche Entwicklung verschiedener Prozessgrößen gezeigt. Die x-Achse zeigt die Zeit in Sekunden, wobei vor allem der Übergangsbereich zwischen dem ersten und zweiten Fahrbereich von Bedeutung ist. Der Beginn des Fahrbereichwechsels bzw. das Ende des ersten Fahrbereichs ist durch die vertikale Linie 51 markiert, während das Ende des Fahrbereichswechsels bzw. der Beginn des zweiten Fahrbereichs durch die vertikale Linie 52 gekennzeichnet ist.

Das erste Diagramm 58 zeigt einen ersten Kupplungsdruck 53 der im ersten Fahrbereich geschlossenen Kupplung 26, weshalb der Kupplungsdruck 53 im zweiten Fahrbereich, d.h. zeitlich nach der Linie 52, nach dem Öffnen der Kupplung 26 auf Null abfällt. Analog steigt der Kupplungsdruck 54 der Kupplung 12 von einem verschwindenden Kupplungsdruck 54 im ersten Fahrbereich auf einen Kupplungsdruck 54 an, der der geschlossenen Kupplung 12 entspricht. Im Übergangsbereich sind für eine kurze Zeit beide Kupplungen 12 und 26 geschlossen. Das normierte Stellsignal 55 des Hydromotors 18, welches in den Formeln als $u_M$ bezeichnet wird, nachdem die Kupplung 12 in das Zahnrad 11 greift, auf den aus dem vorhergesagten Wirkungsgrad berechneten Stellwert zu Beginn des zweiten Fahrbereichs korrigiert. Aufgrund der kurzen Überlappungszeit, der hohen Schaltdynamik und der Verstellträgheit des Hydromotors 18 wird das Stellsignal 55 zu Beginn überhöht. Hiermit wird das Verzögerungsverhalten der Verstellung dynamisch kompensiert und sichergestellt, dass, nach der kurzen Verblockungszeit der beiden Kupplungen 12 und 26, tatsächlich das geforderte hydraulische Übersetzungsverhältnis bzw. der geforderte Schwenkwinkel anliegt. Wird die Kupplung 26 getrennt, zeigt der erste Leistungszweig das geforderte Übersetzungsverhältnis und es treten keine unerwünschten Drehmomentänderungen auf.

Das untere Diagramm 59 zeigt die Zugkraft 56 der Hauptabtriebswelle, die im Übergangsbereich keinen Zugkrafteinbruch aufweist. Die zweite Messkurve 57 zeigt den absoluten Druckunterschied zwischen der Leitung 19a und 19b. Die plötzliche Richtungsänderung des Druckunterschieds 57 bei Null direkt nach dem Ende 52 des Übergangsbereichs markiert den Nulldurchgang des Druckunterschieds aufgrund der Leistungsflussumkehr.

Die beschriebene Erfindung ist nicht auf das dargestellte Ausführungsbeispiel beschränkt.

Alternativ kann anstatt eines Verbrennungsmotors z. B. auch ein Elektro- oder sonstiger Antriebsmotor verwendet werden und ebenso kann der hydrostatische Variator durch einen mechanischen oder einen elektrischen ersetzt werden. Grundsätzlich ist die Erfindung bei allen Leistungsverzweigungsgetrieben mit äußerer Leistungsverzweigung anwendbar.

Die Erfindung ist besonders vorteilhaft mit nur zwei Leistungszweigen, wobei einer einen Variator und einer eine feste Übersetzung aufweist. Allerdings ist die Erfindung auch auf Getriebe mit mehr als zwei Leistungszweigen übertragbar, wobei mindestens ein Leistungszweig einen Variator aufweisen muss und mindestens ein zweiter Leistungszweig vorhanden sein muss. Der zweite Leistungszweig muss dabei keine feste Übersetzung aufweisen, sondern kann auch mehrere Übersetzungssprünge, einen weiteren Variator oder einen elektrische oder hydrodynamische Übertragung aufweisen, allerdings ist es besonders einfach und effektiv den zweiten Leistungszweig als feste mechanische Übersetzung zu realisieren.

Besitzt der zweite Leistungszweig mehrere Übersetzungsstufen, können diese ebenfalls zugkraftunterbrechungsfrei geschaltet werden. Voraussetzung dafür sind Synchronbedingungen an den Kupplungen 12 und 26 auch bei den weiteren Übersetzungen des zweiten Leistungsgetriebes.

Das Steuergerät 40 kann sowohl, wie im Ausführungsbeispiel beschrieben und in Fig. 1 gezeigt, als ein Gerät 40 realisiert sein, welches die Schätzvorrichtung 41, die Vorhersagevorrichtung 42 und die Steuervorrichtung 43 aufweist, als auch als Zusammenschluss der Vorrichtungen 41, 42 und 43 durch Kabel oder auch durch Softwareimplementationen der Vorrichtungen 41, 42 und 43 in einem Steuercomputer mit den nötigen Mess- und Regelschnittstellen. Auch die Steuerung muss nicht elektrisch, z.B. durch elektrische Stellsignale und Proportionalmagneten, erfolgen, sondern kann z. B. auch hydraulisch realisiert werden.

Alle Gewichtskräfte verursacht durch die Erdanziehung und alle nicht explizit genannte Reibungskräfte sind bei den vorstehenden Betrachtungen vernachlässigt.

**Patentansprüche**

1. Leistungsverzweigungsgetriebe mit einem ersten Leistungszweig (15, 16, 4, 20, 21) mit einer stufenlos einstellbaren Übersetzung (4) und mit einem zweiten Leistungszweig (11, 13, 14, 6), der trennbar ist;

   - ein Summiergetriebe (31, 32), welches einen ersten Eingang, der mit dem Ausgang des ersten Leistungszweigs (20, 21) kraftschlüssig verbunden ist, und einen zweiten Eingang aufweist, der mit dem Ausgang des zweiten Leistungszweigs (6) kraftschlüssig verbunden ist;
   - eine Vorrichtung (12) zum Verbinden oder Unterbrechen des zweiten Leistungszweigs (11, 13, 14, 6) bei einem Wechsel von einem Ausgangsfahrbereich in einen Zielfahrbereich;

- eine Steuervorrichtung (43) zum Steuern und Einstellen des Übersetzungsverhältnisses der stufenlos einstellbaren Übersetzung (4);

wobei eine Vorhersagevorrichtung (42) zum Vorhersagen eines Wirkungsgrads ($\eta_v$) des ersten Leistungszweigs (15, 16, 4, 20, 21) in dem Zielfahrbereich mit der Steuervorrichtung (43) verbunden ist, die so eingerichtet ist, dass die stufenlos einstellbare Übersetzung (4) bei einem Wechsel in den Zielfahrbereich unter Berücksichtigung des vorhergesagten Wirkungsgrads ($\eta_v$) so eingestellt wird, dass eine Drehzahldifferenz aufgrund einer Leistungsflussänderung in dem ersten Leistungszweig (15, 16, 4, 20, 21) am Ausgang des ersten Leistungszweigs (20, 21) gerade kompensiert wird,

wobei der erste Leistungszweig (15, 16, 4, 20, 21) ein hydrostatisches, stufenlos einstellbares Getriebe (4) mit einer Hydropumpe (17) und einem Hydromotor (18), die über zwei Leitungen (19a, 19b) miteinander verbunden sind, aufweist und die Hydropumpe (17) und/oder der Hydromotor (18) verstellbar sind/ist,

**dadurch gekennzeichnet, dass** ein erster Drucksensor (33) an der ersten Leitung (19a) angebracht ist und ein zweiter Drucksensor (34) an der zweiten Leitung angebracht ist, die Drucksensoren (33, 34) mit einer Schätzvorrichtung (41) zum Ermitteln des momentanen volumetrischen Wirkungsgrads des ersten Leistungszweigs (15, 16, 4, 20, 21) verbunden sind, die wiederum mit der Vorhersagevorrichtung (42) verbunden ist,

wobei in der Schätzvorrichtung ein Online- oder Offline- geschätzter Parameter ($\theta_{\Delta p}$) zum Ermitteln des momentanen Wirkungsgrads ($\eta_v$) gespeichert ist.

2. Leistungsverzweigungsgetriebe nach Anspruch 1,
wobei die Steuervorrichtung (43) so eingerichtet ist, dass bei einem Wechsel zwischen den Fahrbereichen das Verdrängungsvolumen des Hydromotors (18) und/oder der Hydropumpe (17) unter Berücksichtigung des vorhergesagten Wirkungsgrades ($\eta_v$ (t$_s$_FB2)) so eingestellt wird, dass eine Drehzahldifferenz am Ausgang des ersten Leistungszweigs (20, 21) aufgrund einer Leistungsflussänderung in dem ersten Leistungszweig (15, 16, 4, 20, 21) gerade kompensiert wird.

3. Leistungsverzweigungsgetriebe nach Anspruch 1 oder 2,
wobei die Vorrichtung (12) zum Verbinden oder Unterbrechen des zweiten Leistungszweigs (11, 13, 14, 6) eine reibschlüssige Kupplung (12) in dem zweiten Leistungszweig (11, 13, 14, 6) ist.

4. Verfahren zum Wechseln von einem Ausgangsfahrbereich in einen Zielfahrbereich in einem Leistungsverzweigungsgetriebe (1) mit einem ersten Leistungszweig (15, 16, 4, 20, 21) mit einem stufenlos einstellbaren Getriebe (4) und mit einem zweiten, trennbaren Leistungszweig (11, 13, 14, 6), die folgenden Schritte aufweisend :

- Verbinden oder Unterbrechen (S16) des zweiten Leistungszweigs (11, 13, 14, 6) zum Wechseln von dem Ausgangsfahrbereich in dem Zielfahrbereich beim Vorliegen einer Synchronbedingung (S15) ;
- Vorhersagen (S14) des Wirkungsgrads ($\eta_v$ (t$_s$_FB2)) des ersten Leistungszweigs (15, 16, 4, 20, 21) in dem Zielfahrbereich vor dem Verbinden oder Unterbrechen des zweiten Leistungszweigs (11, 13, 14, 6); und
- Ansteuern (S17) des stufenlos einstellbaren Getriebes (4) des ersten Leistungszweigs (15, 16, 4, 20, 21) nach dem Verbinden oder Unterbrechen (S16) des zweiten Leistungszweigs (11, 13, 14, 6) zum Einstellen des Übersetzungsverhältnisses unter Berücksichtigung des vorhergesagten Wirkungsgrads ($\eta_v$ (t$_s$_FB2)), so dass eine Drehzahldifferenz am Ausgang des ersten Leistungszweigs (20, 21) aufgrund einer Leistungsflussänderung in dem ersten Leistungszweig (15, 16, 4, 20, 21) gerade kompensiert wird,

wobei ein momentaner Wirkungsgrad des ersten Leistungszweigs (15, 16, 4, 20, 21) über einen Online- oder Offline geschätzten Parameter ($\theta_{\Delta p}$) ermittelt wird (S13) und der Wirkungsgrad des ersten Leistungszweigs (15, 16, 4, 20, 21) im Zielfahrbereich auf der Basis des ermittelten Wirkungsgrads vorhergesagt wird,

wobei das stufenlos einstellbare Getriebe (4) hydrostatisch realisiert ist, wobei darin eine Hydropumpe (17) über zwei Leitungen (19a, 19b) einen Hydromotor (18) antreibt und die Hydropumpe (17) und / oder der Hydromotor (18) verstellbar sind / ist,

**dadurch gekennzeichnet,**

**dass** ein erster Drucksensor (33) an der ersten Leitung (19a) und ein zweiter Drucksensor (34) an der zweiten Leitung (19b) angebracht sind,

**dass** der Druckunterschied zwischen den beiden Leitungen (19a, 19b) in der hydrostatischen, stufenlos einstellbaren Übersetzung (4) gemessen (S12) wird und der momentane volumetrische Wirkungsgrad ($\eta_v$) des ersten Leistungszweigs (15, 16, 4, 20, 21) auf der Basis des Druckunterschieds $\Delta P$ zwischen den beiden Leitungen (19a, 19b) in dem hydrostatischen, stufenlos einstellbaren Getriebe (4) ermittelt wird (S13) und der volumetrische Wirkungsgrad $\eta_v$ (t$_s$_FB2) des ersten Leistungszweigs (15, 16, 4, 20, 21) in dem Zielbereich auf der Basis des ermittelten volumetrischen Wirkungsgrads ($\eta_v$) vorhergesagt wird (S14).

**5.** Verfahren nach Anspruch 4,
wobei bei einem Wechsel von dem Ausgangsfahrbereich in den Zielfahrbereich das Verdrängungsvolumen des Hydromotors (18) und/oder der Hydropumpe (17) unter Berücksichtigung eines vorhergesagten volumetrischen Wirkungsgrades ($\eta_v$ ($t_s\_$FB2)) so eingestellt wird (S17), dass eine Drehzahldifferenz am Ausgang des ersten Leistungszweigs (20, 21) aufgrund einer Leistungsflussänderung in dem ersten Leistungszweig (15, 16, 4, 20, 21) gerade kompensiert wird.

**6.** Verfahren nach Anspruch 4 oder 5,
wobei der zweite Leistungszweig (11, 13, 14, 6) durch eine reibungsschlüssige Kupplung (12) getrennt und verbunden wird (S16).

**Claims**

**1.** Power split transmission having a first power branch (15, 16, 4, 20, 21) with a continuously variable transmission (4) and having a second power branch (11, 13, 14, 6) which is disconnectable;

- a summing gear mechanism (31, 32) which has a first input, which is connected to the output of the first power branch (20, 21) in a frictionally locking fashion, and a second input which is connected to the output of the second power branch (6) in a frictionally locking fashion;
- a device (12) for connecting or disconnecting the second power branch (11, 13, 14, 6) at a changeover from an initial driving range into a target driving range;
- a control device (43) for controlling and setting the transmission ratio of the continuously variable transmission (4);

wherein a prediction device (42) for predicting an efficiency level ($\eta_v$) of the first power branch (15, 16, 4, 20, 21) in the target driving range is connected to the control device (43), which is configured in such a way that the continuously variable transmission (4) is set at a changeover into the target driving range, taking into account the predicted efficiency level ($\eta_v$), in such a way that a difference in rotational speed due to a change in the power flux in the first power branch (15, 16, 4, 20, 21) at the output of the first power branch (20, 21) is just compensated, wherein the first power branch (15, 16, 4, 20, 21) has a hydrostatic, continuously variable transmission (4) with a hydraulic pump (17) and a hydraulic motor (18) which are connected to one another via two lines (19a, 19b), and the hydraulic pump (17) and/or the hydraulic motor (18) are/is adjustable, **characterized in that** a first pressure sensor (33) is attached to the first line (19a) and a second pressure sensor (34) is attached to the second line, and the pressure sensors (33, 34) are connected to an estimation device (41) for determining the instantaneous volumetric efficiency level of the first power branch (15, 16, 4, 20, 21), which is in turn connected to a prediction device (42), wherein a parameter ($\theta_{\Delta p}$) which is estimated online or offline is stored in the estimation device for the purpose of determining the instantaneous efficiency level ($\eta_v$).

**2.** Power split transmission according to Claim 1,
wherein the control device (43) is configured in such a way that during a changeover between the driving ranges the expulsion volume of the hydraulic motor (18) and/or of the hydraulic pump (17) is set, taking into account the predicted efficiency level ($\eta_v$ ($t_s\_$FB2)), in such a way that a difference in rotational speed at the output of the first power branch (20, 21) due to a change in the power flux in the first power branch (15, 16, 4, 20, 21) is just compensated.

**3.** Power split transmission according to Claim 1 or 2,
wherein the device (12) for connecting or disconnecting the second power branch (11, 13, 14, 6) is a frictionally locking clutch (12) in the second power branch (11, 13, 14, 6).

**4.** Method for changing over from an initial driving range into a target driving range in a power split transmission (1) having a first power branch (15, 16, 4, 20, 21) with a continuously variable transmission (4) and having a second, disconnectable power branch (11, 13, 14, 6), having the following steps:

- connection or disconnection (S16) with the second power branch (11, 13, 14, 6) for changing over from the initial driving range into the target driving range when a synchronization condition (S15) is met;
- prediction (S14) of the efficiency level ($\eta_v$ ($t_s\_$FB2)) of the first power branch (15, 16, 4, 20, 21) in the target driving range before the connection or disconnection with the second power branch (11, 13, 14, 6); and

- actuation (S17) of the continuously variable transmission (4) of the first power branch (15, 16, 4, 20, 21) after the connection or disconnection (S16) with the second power branch (11, 13, 14, 6) for setting the transmission ratio, taking into account the predicted efficiency level ($\eta_v$ ($t_s$_FB2)), so that a difference in rotational speed at the output of the first power branch (20, 21) due to a change in the power flux in the first power branch (15, 16, 4, 20, 21) is just compensated,

wherein an instantaneous efficiency level of the first power branch (15, 16, 4, 20, 21) is determined by means of a parameter ($\theta_{\Delta p}$) which is estimated online or offline (S13), and the efficiency level of the first power branch (15, 16, 4, 20, 21) is predicted in the target driving range on the basis of the determined efficiency level,

wherein the continuously variable transmission (4) is implemented hydrostatically because in said transmission (4) a hydraulic pump (17) drives a hydraulic motor (18) via two lines (19a, 19b), and the hydraulic pump (17) and/or the hydraulic motor (18) are/is adjustable, **characterized**

**in that** a first pressure sensor (33) is attached to the first line (19a) and a second pressure sensor (34) is attached to the second line (19b),

**in that** the pressure difference between the two lines (19a, 19b) in the hydrostatic, continuously variable transmission (4) is measured (S12), and the instantaneous volumetric efficiency level ($\eta_v$) of the first power branch (15, 16, 4, 20, 21) is determined on the basis of the pressure difference $\Delta P$ between the two lines (19a, 19b) in the hydrostatic, continuously variable transmission (4) (S13), and the volumetric efficiency level $\eta_v$ ($t_s$_FB2) of the first power branch (15, 16, 4, 20, 21) in the target range is predicted on the basis of the determined volumetric efficiency level ($\eta_v$) (S14).

5. Method according to Claim 4,
   wherein at a changeover from the initial driving range into the target driving range the expulsion volume of the hydraulic motor (18) and/or of the hydraulic pump (17) is set, taking into account a predicted volumetric efficiency level ($\eta_v$ ($t_s$_FB2)), in such a way that a difference in the rotational speed at the output of the first power branch (20, 21) due to a change in the power flux in the first power branch (15, 16, 4, 20, 21) is just compensated.

6. Method according to Claim 4 or 5,
   wherein the second power branch (11, 13, 14, 6) is disconnected and connected by means of a frictionally locking clutch (12) (S16).

**Revendications**

1. Transmission à répartition de puissance avec une première branche de puissance (15, 16, 4, 20, 21) avec une transmission réglable en continu (4) et avec une deuxième branche de puissance (11, 13, 14, 6), qui est séparable;

   - un engrenage de sommation (31, 32), qui présente une première entrée qui est reliée en complémentarité de force à la sortie de la première branche de puissance (20, 21), et une deuxième entrée qui est reliée en complémentarité de force à la sortie de la deuxième branche de puissance (6),
   - un dispositif (12) destiné à relier ou à interrompre la deuxième branche de puissance (11, 13, 14, 6) lors d'un changement d'une zone de roulage initiale à une zone de roulage cible;
   - un dispositif de commande (43) pour commander et régler le rapport de transmission de la transmission réglable en continu (4);

   dans laquelle un dispositif de prédiction (42) destiné à prédire un rendement ($\square_v$) de la première branche de puissance (15, 16, 4, 20, 21) dans la zone de roulage cible est relié au dispositif de commande (43), et est conçu de telle manière que la transmission réglable en continu (4) soit, lors d'un changement à la zone de roulage cible, réglée en tenant compte du rendement prédit ($\square_v$), de telle manière qu'une différence de vitesse de rotation due à une variation du flux de puissance dans la première branche de puissance (15, 16, 4, 20, 21) soit compensée directement à la sortie de la première branche de puissance (20, 21),
   dans laquelle la première branche de puissance (15, 16, 4, 20, 21) présente une transmission hydrostatique réglable en continu (4) avec une pompe hydraulique (17) et un moteur hydraulique (18), qui sont reliés l'un à l'autre par deux conduites (19a, 19b), et la pompe hydraulique (17) et/ou le moteur hydraulique (18) est/sont réglable(s),
   **caractérisée en ce qu'**un premier capteur de pression (33) est monté sur la première conduite (19a) et un deuxième capteur de pression (34) est monté sur la deuxième conduite, les capteurs de pression (33, 34) sont reliés à un dispositif d'évaluation (41) pour la détermination du rendement volumétrique instantané de la première branche de puissance (15, 16, 4, 20, 21) qui est de nouveau reliée au dispositif de prédiction (42),
   dans laquelle un paramètre ($\theta_{\square p}$) évalué en ligne ou hors ligne est mémorisé dans le dispositif d'évaluation pour la détermination du rendement instantané ($\square_v$).

2. Transmission à répartition de puissance selon la revendication 1, dans laquelle le dispositif de commande (43) est conçu de telle manière que, lors d'un changement entre les zones de roulage, le volume de refoulement du moteur hydraulique (18) et/ou de la pompe hydraulique (17) soit réglé en tenant compte du rendement prédit ($\square_v$ ($t_s$_FB2)), de telle manière qu'une différence de vitesse de rotation à la sortie de la première branche de puissance (20, 21) due à une variation du flux de puissance dans la première branche de puissance (15, 16, 4, 20, 21) soit directement compensée.

3. Transmission à répartition de puissance selon la revendication 1 ou 2, dans laquelle le dispositif (12) destiné à relier ou à interrompre la deuxième branche de puissance (11, 13, 14, 6) est un accouplement à friction (12) dans la deuxième branche de puissance (11, 13, 14, 6).

4. Procédé de changement d'une zone de roulage initiale à une zone de roulage cible dans une transmission à répartition de puissance (1) avec une première branche de puissance (15, 16, 4, 20, 21) avec une transmission réglable en continu (4) et avec une deuxième branche de puissance séparable (11, 13, 14, 6), qui présente les étapes suivantes:

   - relier ou interrompre (S16) la deuxième branche de puissance (11, 13, 14, 6) pour le changement de la zone de roulage initiale à la zone de roulage cible en présence d'une condition de synchronisation (S15);
   - prédire (S14) le rendement ($\square_v$ ($t_s$_FB2)) de la première branche de puissance (15, 16, 4, 20, 21) dans la zone de roulage cible avant la liaison ou l'interruption de la deuxième branche de puissance (11, 13, 14, 6); et
   - commander (S17) la transmission réglable en continu (4) de la première branche de puissance (15, 16, 4, 20, 21) après la liaison ou l'interruption (S16) de la deuxième branche de puissance (11, 13, 14, 6) pour le réglage du rapport de transmission en tenant compte du rendement prédit ($\square_v$ ($t_s$_FB2)), de telle manière qu'une différence de vitesse de rotation à la sortie de la première branche de puissance (20, 21) due à une variation du flux de puissance dans la première branche de puissance (15, 16, 4, 20, 21) soit directement compensée,

   dans laquelle on détermine (S13) un rendement instantané de la première branche de puissance (15, 16, 4, 20, 21) au moyen d'un paramètre ($\theta_{\square p}$) évalué en ligne ou hors ligne et on prédit le rendement de la première branche de puissance (15, 16, 4, 20, 21) dans la zone de roulage cible sur la base du rendement déterminé,
   dans laquelle on réalise la transmission réglable en continu (4) de façon hydrostatique, dans laquelle une pompe hydraulique (17) entraîne un moteur hydraulique (18) via deux conduites (19a, 19b) et la pompe hydraulique (17) et/ou le moteur hydraulique (18) est/sont réglable(s), **caractérisé en ce que**
   un premier capteur de pression (33) est monté sur la première conduite (19a) et un deuxième capteur de pression (34) est monté sur la deuxième conduite (19b),
   on mesure (S12) la différence de pression entre les deux conduites (19a, 19b) dans la transmission hydrostatique réglable en continu (4) et on détermine (S13) le rendement volumétrique instantané ($\square_v$) de la première branche de puissance (15, 16, 4, 20, 21) sur la base de la différence de pression $\square$P entre les deux conduites (19a, 19b) dans la transmission hydrostatique réglable en continu (4) et on prédit (S14) le rendement volumétrique $\square_v$ ($t_s$_FB2) de la première branche de puissance (15, 16, 4, 20, 21) dans la zone cible sur la base du rendement volumétrique déterminé ($\square_v$).

5. Procédé selon la revendication 4, dans lequel, lors d'un changement de la zone de roulage initiale à la zone de roulage cible, on règle (S17) le volume de refoulement du moteur hydraulique (18) et/ou de la pompe hydraulique (17) en tenant compte d'un rendement volumétrique prédit ($\square_v$ ($t_s$_FB2)), de telle manière qu'une différence de vitesse de rotation à la sortie de la première branche de puissance (20, 21) due à une variation du flux de puissance dans la première branche de puissance (15, 16, 4, 20, 21) soit directement compensée.

6. Procédé selon la revendication 4 ou 5, dans lequel on sépare ou on relie (S16) la deuxième branche de puissance (11, 13, 14, 6) au moyen d'un accouplement à friction (12).

FIG.1

FIG.2

Flowchart:
- Beschleunigen — S11
- Messen — S12
- Schätzen — S13
- Vorhersagen — S14
- Synchrondrehzahl? — S15 (Nein → loops back; Ja ↓)
- Schließen der Kupplung — S16
- Einstellen des Hydromotors — S17

FIG.3

Labels: 33, $P_B$, 19a, 4, $Q_{eff}$, $Q_{thP}$, $Q_{leakP}$, $Q_{leakM}$, $Q_{thM}$, 62, 61, 18, $n_P$, 17, 34, $P_A$, 19b, $n_M$, 16, 20

FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007037107 A1
- DE 10144943 A1